Europäisches Patentamt

(19) European Patent Office

Office européen des brevets

(11) Publication number : 0 487 290 A2

## (12) EUROPEAN PATENT APPLICATION

(21) Application number : 91310633.2

(22) Date of filing : 19.11.91

(51) Int. Cl.⁵ : G06F 9/46

(30) Priority : 19.11.90 US 615549

(43) Date of publication of application :
27.05.92 Bulletin 92/22

(84) Designated Contracting States :
DE FR GB

(71) Applicant : International Business Machines
Corporation
Old Orchard Road
Armonk, N.Y. 10504 (US)

(72) Inventor : Covey, Ernest Anderson
303 Richland Lane
Georgetown, Texas 78628 (US)
Inventor : Sullivan, Michael Joseph
3810 Standfield Court
Austin, Texas 78732 (US)

(74) Representative : Mitchell, Allan Edmund et al
IBM United Kingdom Limited Intellectual
Property Department Hursley Park
Winchester Hampshire SO21 2JN (GB)

(54) Method and means for operating a computer workstation.

(57) In a program and method for concurrently interfacing multiple application programs to an emulation session running on a multi-tasking workstation of a network, parameters representing the functions to be performed by the application programs on the emulation session resources are compared for compatibility by an emulation interface program. For application programs with compatible parameters, the functional requests are processed or queued depending on the lock status. Application program requests directed to the interface program are queued when subject to a lockout. The parameters for determining whether application programs are permitted concurrent access to the emulation session include a default set, which set is invoked and suitable to represent a classic application program of non-multi-tasking vintage.

FIG. 5A

EP 0 487 290 A2

FIG. 5B

FIG. 5C

The present invention relates generally to computer workstations and their operation. More particularly, the invention is directed to operations suitable co-operatively to control the interface between a terminal emulation session running on a multi-tasking workstation and a multiplicity of application programs which interact with (write/read) resources of the emulation session.

Computer programs which cause personal computers or workstations to emulate functionally one of a network of terminals connected to a host mainframe computer are in common use. Representative examples are the terminal emulator routines in the IBM OS/2 Extended Edition (EE) operating system program, which emulators functionally replicate the IBM 3270 and IBM 5250 terminal protocols. The advent of the multi-tasking workstation, such as the IBM PS/2 workstation, running under the OS/2 operating system program, allows a user to perform communication functions under the terminal emulator code while concurrently executing other programs potentially relating to the terminal emulator functions. A high level language interface between the emulator session and an application program interacting with resources of the emulation session is available as a feature of the OS/2 EE program. Such emulator high level language application program interface (EHLLAPI) provides an interface for transferring information between the application program and the emulation session. Application programs are particularly useful in automating repetitive tasks of the emulator session, such as reformatting and presenting emulator screen data, simplifying interactions with the host computer, monitoring events as they occur in the host and monitoring response time and availability of the network or host.

The EHLLAPI interface provides the application program with access to the emulation session resources adequate to manage select functions of those resources. Two functions of the emulation session which are particularly suited to application program management are the presentation space functions, which include the screen, keyboard and mouse controls, and the window functions relating to the emulation session. With the presence of an OS/2 multi-tasking operating system on the PS/2 multi-tasking workstation, the terminal user has the resources concurrently to operate the emulation session together with multiple application programs accessing the presentation space and window functions of the emulation session.

Unfortunately, many application programs are incompatible relative to each other or the emulation session program when operated concurrently. For example, an EHLLAPI interfaced application program monitoring the presentation space of the screen can interfere with emulation session file transfers. Data integrity becomes of particular concern when multiple application programs have the functional capability to read and write the same presentation space, in that undesired data changes and read/write collisions become likely. Simple supervisory application programs, such as those which manage the emulation session appearance, can interfere with other application programs seeking to change the appearance. The window resources of the emulation session are also vulnerable to conflicts, for example where two application programs interfacing the emulation session each define opposite visibility states for the window.

A need has thus evolved for a computer program or architecture and method of operation which efficiently utilise the multi-tasking capabilities of advanced workstations during emulator sessions on the workstations. The present existence of numerous application programs which utilise the resources of an emulation session through an EHLLAPI type interface dictates the desirability of a migrational solution, in contrast to an approach which makes all existing application programs obsolete. The new interface thus must extend the usability of programs which interact with emulation sessions in non-multi-tasking environments to multi-tasking environments without risking emulation session data integrity.

According to one aspect of the invention, therefore, there is provided a method of controlling a workstation to allow application programs to share access to control device and window resources in an emulation session running on the workstation, comprising the steps of categorising the functions performed by the resources, matching the categories of functions, and accessing the emulation session using calls defined by functional priorities.

From another aspect, the invention provides a method of sharing access to an emulation session running on a workstation, comprising defining the emulation session resources subject to access, categorising functions performed on the resources in the emulation session, matching categorised functions, and generating calls accessing the emulation session based upon the resources, functions and matches.

The invention may be defined as a method for enabling multiple application programs to share access to an emulation session running on a multi-tasking workstation operating as a terminal on a network, comprising the steps of defining the workstation resources subject to accessing, matching functions to be performed on the resources, and generating emulation session calls derived from the parameters representing the matched functions.

From yet another aspect, there is provided, according to the invention a method for interfacing a second application program to an emulation session of a multi-tasking workstation running a first application program, comprising the steps of comparing shared access parameters of the first and second application programs upon a connect request by the second application program, selectively calling functions for a second application program having compatible parameters, enabling a lock to the emulation session in the absence of a lock by the first application program, and queueing the second application program when the emulation session is locked by the first application program.

The invention extends to a shared access emulator comprising means for defining the emulation resources subject to access, means for categorising functions performed in emulation sessions running on a workstation, means for matching categorised functions, and means for generating calls accessing the emulation session based upon the resources, functions and matches.

The invention may be defined as a shared access emulator comprising means for categorising functions to be performed by control device and window resources in an emulation session running on a workstation, means for matching the categories of functions, and means for accessing the emulation session using calls defined by functional priorities.

A workstation according to the invention, comprises means for operating as a terminal in a network, comprising means for operating the workstation in a multi-tasking mode, means for emulating in the workstation the network protocol for a terminal, means for defining in an emulation session the resources subject to a shared access, means for categorising functions performed on the resources in the emulation session, means for matching categorised functions, and means for generating calls by multi-tasking operated application programs to access the emulation session based upon the resources, functions and matches.

The present invention provides an interface program architecture and method of operation by which an emulation session executing on a multi-tasking workstation, representing a terminal within a network, can be accessed by multiple application programs using the workstation's multi-tasking operating system. In one form, the invention encompasses an interface program which identifies the emulation session resources subject to accessing, categorises the functions to be performed on such resources, matches the categorised functions, and generates calls accessing the emulation session based upon the resources selected, the functions requested, and the matches defined. In a representative practice, the interface program selects a window resource, establishes as a function the reading of such resource, concurrently excludes the writing of the resource, and generates calls accessing the emulation session based upon such program parameters.

In a preferred practice of the invention, the program and method for interfacing a multiplicity of application programs to the resources of an emulation session executing on a multi-tasking workstation commences with a compatibility comparison of application program parameters and those of other executing application programs, undertakes a queuing of functional requests upon encountering a locked status of the interface, requests a locked status upon receiving access to the interface, processes the requested access to the emulation session, and unlocks the interface upon completion of the access by the application program.

These and other features of the invention will be more easily understood from the following particular description with reference to the accompanying drawings, in which :-

Fig. 1 schematically depicts an operating environment for the invention;

Fig. 2 schematically depicts an advanced EHLLAPI type interface by which multiple application programs interface the emulation session program;

Figs. 3A and 3B schematically illustrate by flow diagram the operations of a new form application program;

Figs. 4A and 4B schematically illustrate by flow diagram the operations of an old form application program; and

Figs. 5A to 5C schematically depict by flow diagram the interaction between an application program and the advanced EHLLAPI type interface program and process now defined.

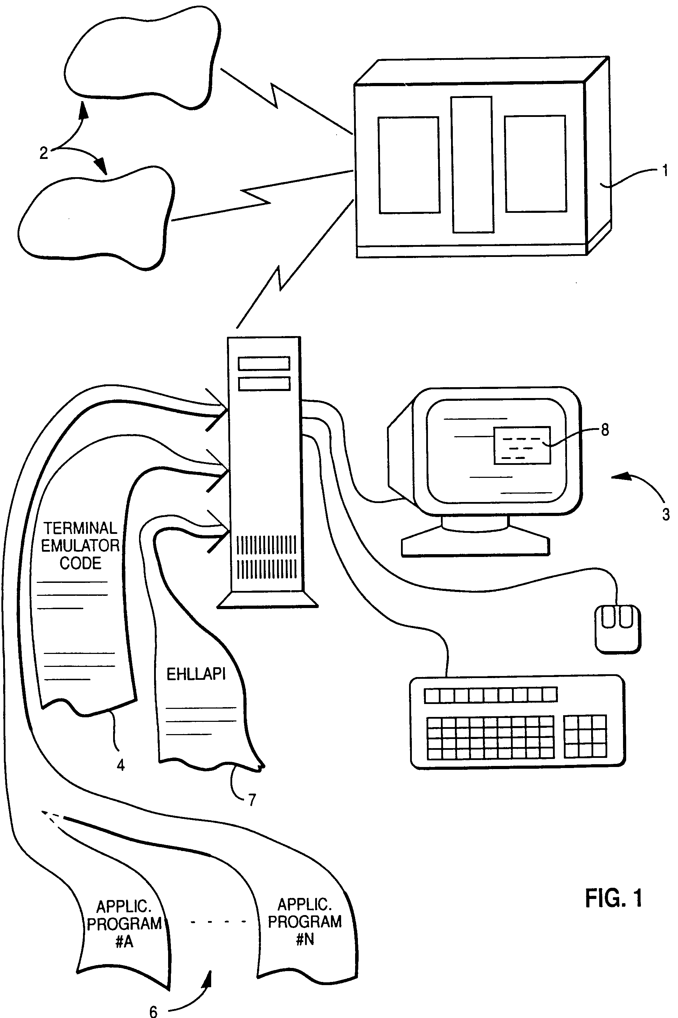

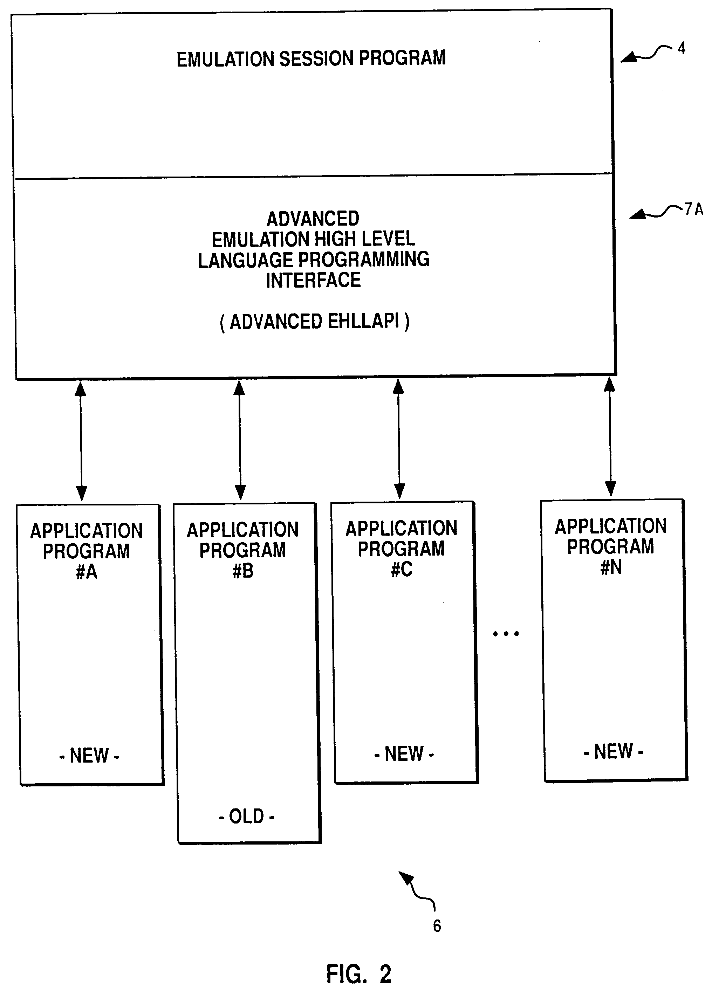

The operating environment (Fig. 1) to which the program and method of the present invention relate, includes a host computer 1, preferably an IBM (International Business Machines Corporation) System/370 or AS/400 computer, connected to a multiplicity of network terminals 2, such as IBM 3270 or 5250 terminals or emulators thereof, and to a workstation 3 configured to emulate a terminal. Preferably the emulation is accomplished in an IBM PS/2 workstation using the IBM OS/2 Extended Edition (EE) operating system and connected to the network via an IBM communications adapter. Terminal emulator code 4 running on workstation 3 ensures that the communication with host computer 1 conforms to the protocol of the network. Also present is the code for a multiplicity of application programs 6, suffixed A to N, which programs have been developed and evolved to assist the human user of workstation 3 in the use of the emulation session. In a representative group of application programs 6 (Fig. 2), each has an individual function, such as automated logon to the network (A), automated data transfer (C), automated menu navigation (N), and automated screen activity monitoring (B). The monitoring function is commonly used to notify the human user when a network action occurs, such as the receipt of the electronic mail addressed to the user's terminal. Numerous such programs exist to assist users having limited training in the esoteric operations of network terminals.

EHLLAPI type code 7 (Fig. 1) exists in the OS/2 Extended Edition (EE) operating system to provide an interface between one of the application programs 6 and the terminal emulation code 4. Prior to the availability of multi-tasking workstations and operating systems, the EHLLAPI type interface code 7 coordinated the interaction between the emulator session program 4 and a single application program of the group 6. With the advent of multi-tasking capability in workstation 3, multiple application programs A to N can operate and interface concurrently with emulation session program 4. As noted earlier, this environment introduces the possibility of erroneous interaction between multiple application programs and the emulation session. The likelihood is further accentuated by the presence of a windowing capability with the PS/2 workstation operating under the OS/2 EE operating system. The existence of windows 8, and the relationships therebetween and to the data therein, exacerbates the likelihood of data erroneous caused by conflicting interactions between various of the application programs 6. For example, a concurrent reading and writing of data at screen locations which encompass overlapping windows is a likely source of errors.

According to the present invention, the multi-tasking capabilities of workstation 3 are used in the context of an emulation session 4 by providing an advanced EHLLAPI type program 7A (Fig. 2) and method of use which appropriately shares the emulation session presentation space and window resources. The invention classifies application programs 6 according to the functions the programs perform while interfacing emulation session program 4. Such grouping of application programs by function leads to the definition of four classes, which classes which are distinguished by the effects they produce on the emulation session resources.

The first class is the supervisory application program. The supervisory application program is characterised in that it operates so as to prevent conflicts with other concurrently executing application programs. A supervisory class application program has by definition both read and write capability through the advanced EHLLAPI interface 7A to the emulation session. Finally, this class encompasses the new application programs, such as A and C in the group 6 (Fig. 2). As such, this class presumes that old applications programs, those previously in use, require supervisory action to ensure complementary execution and data integrity.

The second class of application programs subject to interface via the advanced EHLLAPI interface 7A of the present invention are responsive to the class of application programs which seek exclusive write capability, and thereby prevent other programs from issuing concurrent write operations to the emulation session.

The third class of application programs defined for purposes of multi-tasking operation share both read and write functions with other application programs interfacing via the advanced EHLLAPI program 7A. Thus, such application programs allow concurrent reading and writing by other application programs when interfacing the emulation session program in a multi-tasking environment.

The fourth class of application programs is characterised by the need solely to read data from the emulation session via the advanced EHLLAPI interface 7A. For such class, other concurrently executing application programs are permitted to both read and write the emulation session presentation space and window resources.

For the classes defined above, a writing function is that which produces a change in the emulation session presentation space data, the windows characteristics, or the states of physical devices. Correspondingly, the application program read operation is considered to be any operation which invokes an advanced EHLLAPI query of the emulation session resources without changing the content thereof.

These classifications of application programs are used to define an association of parameter sets within the application programs. The parameters define functions requested by the application programs together with the resource access restrictions imposed during the execution of the application programs.

According to a preferred practice of the invention, an advanced EHLLAPI program and method of use prescribes application program parameters to control the concurrent interface to the emulation session. The new application programs subject to advanced EHLLAPI interface with an emulation session are defined by parameter sets which, first, define the resource being requested of the emulation session and, second, prescribe the functions such application programs will permit of other application programs concurrently executing.

Old application programs, namely those which were not designed with such parameters, for example, program B (Fig. 2), are assigned a default parameter set. Existing application programs thus remain usable, though somewhat restricted in applicability. The default parameter set is identified as WRITE_SUPER and is interpreted as an application program requesting both emulation program read and write functions while allowing supervisory applications to share all emulation session resources.

The second parameter set defined according to the invention is SUPER_WRITE. This parameter set represents an application program which is supervisory in form yet will allow other application programs to execute concurrent write functions. The third grouping of functions is represented by the parameter set WRITE_WRITE. This parameter set corresponds to an application program which is requesting a concurrent write functional capability, yet will allow other application programs to write concurrently (and also read) the emulation session resources. The fourth category of parameters is identified as WRITE_READ. This set defines an application program which will request a concurrent write (and also read) functional capability while allowing other applications programs to read concurrently the emulation session resources. The fifth parameter set, WRITE_NONE, represents an application program which desires to write concurrently (and also read) the emulation session resources, but will not allow other application programs to make any calls to the emulation session resources, effectively monopolising the resources. The sixth parameter set according to this practice of the invention is identified as READ_WRITE. This set represents an application program which desires to issue concurrently only read functional requests while permitting other application programs to issue concurrently either read or write requests to the emulation session resources.

An application program which requires absolute data integrity during concurrent interface with an emulation session via advanced EHLLAPI interface utilises the fifth WRITE_NONE parameter set. As such it pre-empts all emulation session resources during the interface.

## Table A

| | Second Application | | | | | |
| | Parameter Requested | | | | | |
| | SUPER WRITE | WRITE SUPER | WRITE WRITE | WRITE READ | WRITE NONE | READ WRITE |
|---|---|---|---|---|---|---|
| First application | | | | | | |
| Parameter Requested | | | | | | |
| SUPER WRITE | Y | Y | Y | N | N | Y |
| WRITE SUPER | Y | N | N | N | N | N |
| WRITE WRITE | Y | N | Y | N | N | Y |
| WRITE READ | N | N | N | N | N | Y |
| WRITE NONE | N | N | N | N | N | N |
| READ WRITE | Y | N | Y | Y | N | Y |

The matrix of parameter sets as appears in Table A defines by the symbol "Y" that two application programs are capable of concurrently interacting with an emulation session via the advanced EHLLAPI interface Matrix combinations identified by the letter "N" are not permitted concurrently to interface the emulation session.

The present invention thus defines a program and method of computer operation whereby concurrent interfaces between a multiplicity of application programs and an emulation session executing on a multi-tasking workstation are selectively invoked properly to manage emulation session presentation space and window resources to application program functional requests. The matching is accomplished according to the matrix defined by Table A. Table B sets forth representative presentation space resources and related access requirements.

## Table B

| Presentation Space Resource | Function |
|---|---|
| Disconnect presentation space | Write or read |
| Send key | Write |
| Wait | Read |
| Copy presentation space | Read |
| Search presentation space | Read |
| Query cursor location | Read |
| Copy presentation space to string | Read |
| Reserve | Write |
| Release | Write |
| Copy OIA | Read |
| Query field attribute | Read |
| Copy string to presentation space | Write |
| Search field | Read |
| Find field position | Read |
| Find field length | Read |
| Copy string to field | Write |
| Copy field to string | Read |
| Set cursor | Write |

Table C sets forth representative emultion window resources and related functional requiremants.

## Table C

| Window Resource | Function |
|---|---|
| Disconnect window service | Write or read |
| Query window coordinates | Read |
| Window status | Write (set option) or read (query option) |
| Change Switch list name | Write |
| Change name | Write |
| Control switch list entry | Write |

Even when application programs are by virtue of the matrix in Table A permitted concurrently to connect and operate with the emulation session there remains a possibility of a conflict. According to the present invention the conflict is eliminated by serialising the access through the advanced EHLLAPI interface by using lock functions, i.e. functions which temporarily reserve exclusive use of an emulation session resource. Once an application program has requested and received a lock from the advanced EHLLAPI interface, other concurrently connected applications are queued pending the removal of the lock.

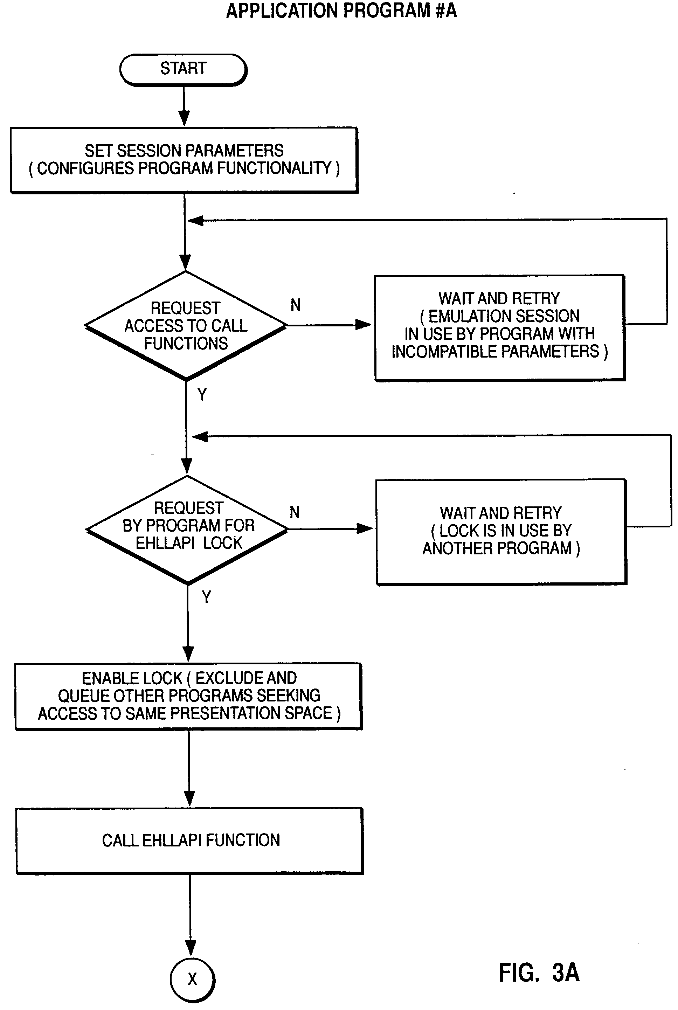

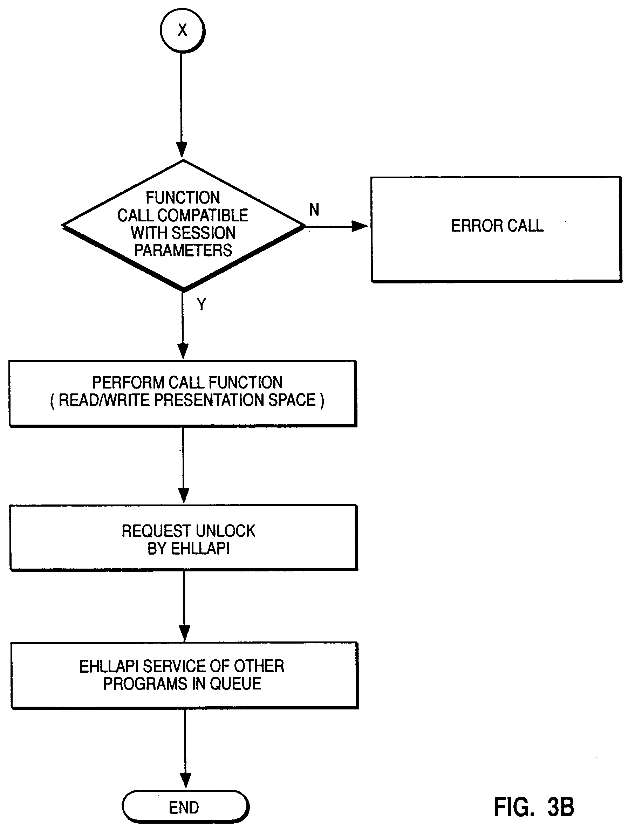

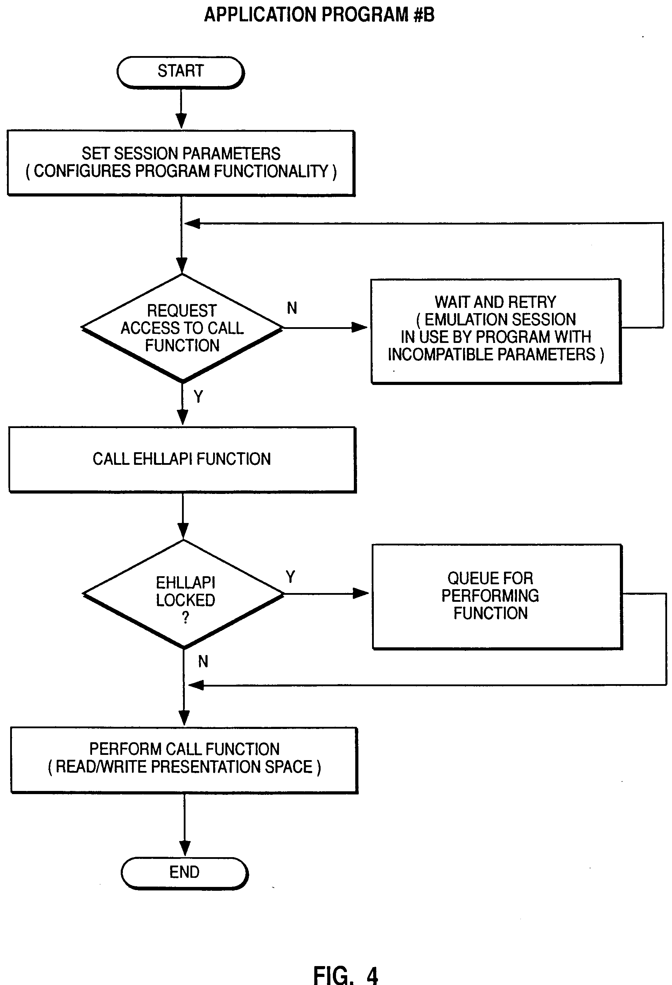

A new application program, such as application program A of the group 6 (Fig. 2), executes an accessing of emulation session through the advanced EHLLAPI interface according to the present invention by the succession of operations depicted in Figs. 3A and 3B. An old application program, such as B of the group 6 (Fig. 2), executes the succession of operations depicted in Figs. 4A and 4B. The steps prescribed for application program B represent those defined by the parameter set WRITE_SUPER as a consequence of the default state associated with the old program. The absence of an advanced EHLLAPI operation in the flow of application program B is clearly evident when compared to the operations as set forth for application program A.

The operations ascribed to application program A begin with a setting of the parameters. This operation is followed by an undertaking to access the emulation session, which access is subject to compatible parameters and the absence of a lockout. Thereafter, the program invokes a lockout, enables the advanced EHLLAPI interface, executes the call function, and concludes with an unlock of the advanced EHLLAPI interface.

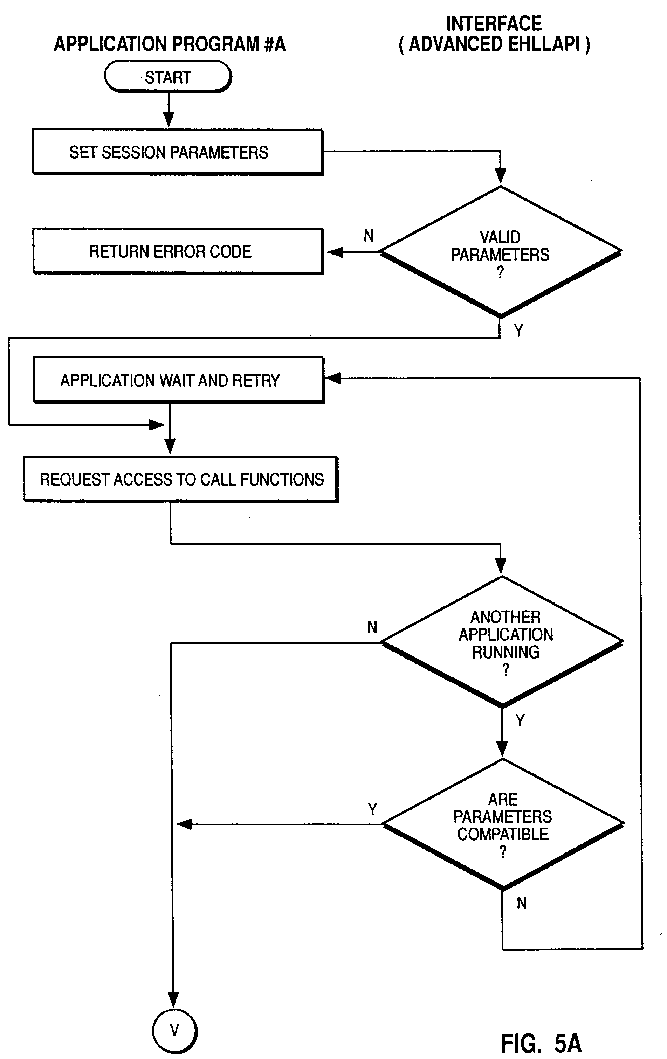

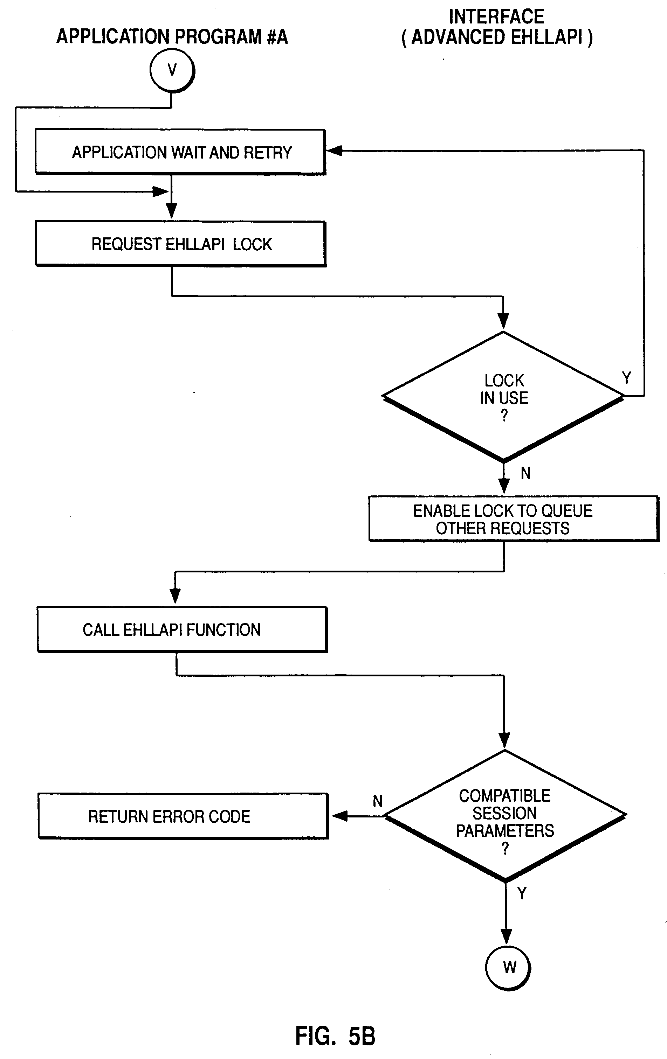

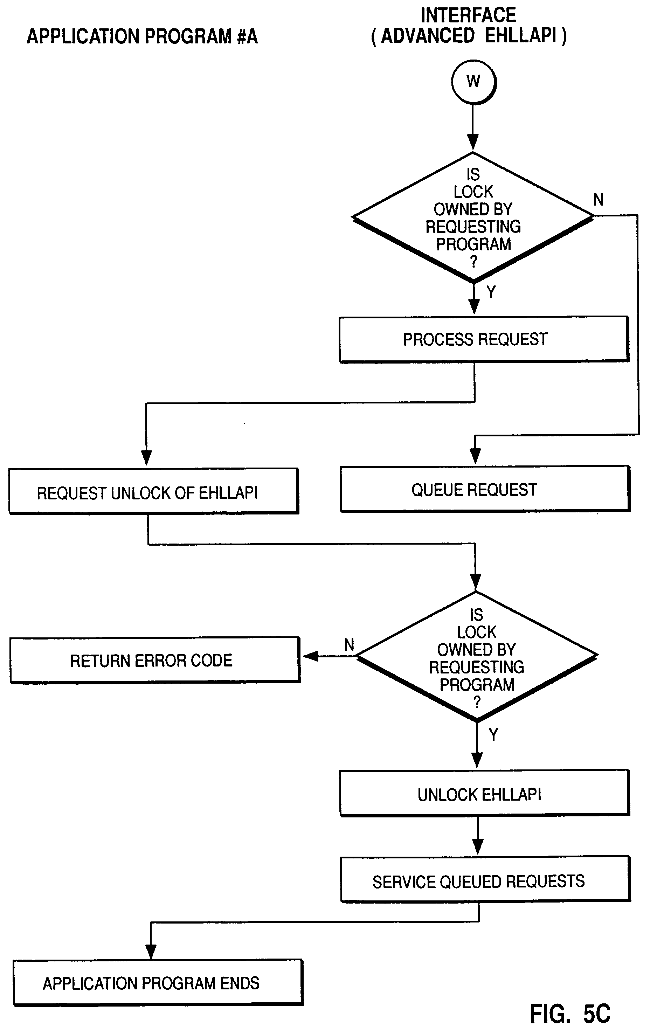

The interaction between the application program A and the advanced EHLLAPI interface defined herein, but from the perspective of shifting activity is depicted in the flow diagram of Figs. 5A, 5B and 5C which illustrate the transition of control between the application program and the advanced EHLLAPI interface in the course of executing the representative application program A, one of the new programs which includes resources for concurrent operation. From a consideration of the flow diagram, it is apparent that control shifts between the supervisory level of the advanced EHLLAPI interface and the functional interactions with emulation session resources. Calls and requests originate with the application program while parameter verification and usage states are evaluated by the interface program. The interactions clearly establish that the interface between the application program and an emulation session resources is subject to numerous parameter and function compatibility considerations at incrementally distinguishable stages of application program execution.

Pseudo code, from which source code may be derived, representing the most significant functions of the advanced EHLLAPI interface is set forth hereinafter. The first eighty six lines of pseudo code are directed to the functions performed in the latter two decision elements of the advanced EHLLAPI interface as depicted in Fig. 5A. The code illustrates the decision process by which a new connection is allowed only if it is determined to be compatible with the parameters of the existing connection. Such a procedure would be invoked whenever the application program called a connection function from the advanced EHLLAPI interface.

```
000 BEGIN PROCEDURE TO CHECK SHARED ACCESS PARAMETER
001   ON CONNECT REQUEST
002   If another application is already connected
```

```
003   check if shared access parameter from new
004   request is incompatible with parameter from
005   existing connection
006   Switch on shared access requested
007     Case 1:  READ_WRITE access requested
008       IF current connection exists with
009         WRITE_NONE parameter reject request
010       ELSE if current connection exists with
011         WRITE_SUPER parm reject request
012       END
013     ENDCASE
014     Case 2:  WRITE_WRITE access requested
015       IF current connection exists with
016         WRITE_NONE parameter reject request
017       ELSE if current connection exists with
018         WRITE_READ parm reject request
019       ELSE if current connection exists with
020         WRITE_SUPER parm reject request
021       END
022     ENDCASE
023     Case 3:  WRITE_READ access requested
024       IF current connection exists with
025         WRITE_WRITE parameter reject request
026       ELSE if current connection exists with
027         WRITE_READ parm reject request
028       ELSE if current connection exists with
029         WRITE_NONE parm reject request
030       ELSE if current connection exists with
031         WRITE_SUPER parm reject request
032       ELSE if current connection exists with
033         SUPER_WRITE parm reject request
034       END
035     ENDCASE
036     Case 4:  WRITE_NONE access requested
037       IF current connection exists with
038         WRITE_WRITE parameter reject request
039         ELSE if current connection exists with
```

```
040        WRITE_READ parm reject request
041          ELSE if current connection exists with
042            WRITE_NONE parm reject request
043          ELSE if current connection exists with
044            READ_WRITE parm reject request
045          ELSE if current connection exists with
046            WRITE_SUPER parm reject request
047          ELSE if current connection exists with
048            SUPER_WRITE parm reject request
049          END
050        ENDCASE
051        Case 5:  WRITE_SUPER access requested
052          IF current connection exists with
053            WRITE_WRITE parameter reject request
054          ELSE if current connection exists with
055            WRITE_READ parm reject request
056          ELSE if current connection exists with
057            WRITE_NONE parm reject request
058          ELSE if current connection exists with
059            READ_WRITE parm reject request
060          ELSE if current connection exists with
061            WRITE_SUPER parm reject request
062          END
063        ENDCASE
064        Case 5:  SUPER_WRITE access requested
065          IF current connection exists with
066            WRITE_NONE parameter reject request
067          ELSE if current connection exists with
068            WRITE_READ parm reject request
069          END
070        ENDCASE
071    END SWITCH
072    IF connection request is compatible so far
073        with existing connection(s), check keyword
074        parameter for compatibility
075        IF keyword supplied with connection request
076            is identical with keyword received with
077            existing connection
```

```
078          accept connection request
079        ELSE keywords are incompatible
080          reject connection request
081        END
082      END
083    ELSE no connection already exists
084        accept connect request
085    END
086 END PROCEDURE
```

The next thirty lines of pseudo code correspond to the operations represented by the initial elements of the advanced EHLLAPI interface flow diagram in Fig. 5C. These represent procedures invoked when the application program calls the advanced EHLLAPI interface function as set forth on Fig. 5B, and the session parameters are found to be compatible. The steps of the pseudo code set forth that the application program having the lock has its request processed while other applications are serially queued until the lock is removed.

```
001  BEGIN PROCEDURE TO PROCESS APPLICATION PROGRAM
002    INTERFACE (API) REQUESTS
003    IF application making an API request is
004      Connected
005      IF connection access type is sufficient for
006        this type of API request (ie Read type,
007        Write type request)
008        IF API LOCK is in place
009          IF application making API request is not
010              the same application that had created
011              the lock
012            Attach API request to FIFO queue
013          ELSE application making API request
014            created lock process API request and
015            return results to appl
016          END
017        ELSE no lock in place
018          process API request and return results to
019          application
```

```
020        END
021       ELSE access type is insufficient
022          return request to application with bad
023          return code
024       ENDIF
025      ELSE application making request is not
026       connected
027       return request to application with bad return
028       code
029     END
030   END PROCEDURE
```

The next eleven lines of pseudo code relate to the removal of the lock and the successive processing of queued application program requests, on an FIFO basis.

```
001   BEGIN PROCEDURE TO PROCESS QUEUED API REQUESTS
002     WHILE there are pending requests on API
003       serialisation queue
004       Remove API request from top of queue
005       Switch on the type of API request
006          load service specific parameters
007          call service specific subroutine
008          call service entry point
009       endSwitch
010     END
011   END PROCEDURE
```

The final ten lines of pseudo code set forth the operations undertaken by the advanced EHLLAPI interface when an application program initiates an exit before the conclusion of the flow diagram depicted in the succession of Figs. 5A to 5C. In this case, the advanced EHLLAPI interface checks to determine whether the serialisation queue has any pending requests and if so discards such before initiating a disconnect from the emulation session. Given that this is a premature termination between the application program and the emulation session resources via the advanced EHLLAPI interface, the operations do not appear within the succession of normal flow diagram elements in the Figures.

```
001  BEGIN PROCEDURE TO UNLINK DEPARTING APPLICATION
002    REQUESTS
003    WHILE not end of API serialisation queue
004      IF element on queue is a request from the
005        departing appl remove request and discard
006          it
007      END
008    move to next queue element
009    END
010  END PROCEDURE
```

The advanced EHLLAPI interface program and method of practice defined herein provides a multi-tasking workstation user with the capability concurrently to interface multiple application programs to the resources of an emulation session running on the workstation. Furthermore, the invention allows the concurrent use of both old and new application programs, notwithstanding the absence of parameter definition mechanisms in such old programs, by an appropriate allocation of the default states in relation to the supervisory parameters. These general features are acquired by assigning parameters to application programs and ensuring that read and write functions directed to the presentation space and emulation window resources of the emulation session do not conflict during concurrent operation. Furthermore, the invention defines programs and methods of locking to avoid conflicts and effectively utilises serialised queues in calling advanced EHLLAPI interface functions.

Though the invention has been described and illustrated by way of specific embodiment, the apparatus and methods should be understood to encompass the full scope of structures and practices defined by the claims set forth hereinafter.

## Claims

1. A method of controlling a workstation to allow application programs to share access to control device and window resources in an emulation session running on the workstation (3), comprising the steps of categorising the functions performed by the resources, matching the categories of functions, and accessing the emulation session using calls defined by functional priorities.

2. A method according to Claim 1, wherein the steps of categorising and matching include the generation of related parameters used in the accessing step.

3. A method according to Claim 2, wherein the parameters relate to read, write and read/write inhibit functions.

4. A method of sharing access to an emulation session running on a workstation, comprising defining the emulation session resources subject to access, categorising functions performed on the resources in the emulation session, matching categorised functions, and generating calls accessing the emulation session based upon the resources, functions and matches.

5. A method according to Claim 4, wherein the resources defined are emulation session presentation space and windows.

6. A method according to Claim 5, wherein the presentation space resources are responsive to a keyboard, a pointing device, or an application program.

7. A method according to Claim 6, wherein the functions categorised define read, write and read/write inhibit parameters.

8. A method according to Claim 4, 5, 6 or 7, wherein calls are generated responsive to compatible programs.

EP 0 487 290 A2

9. A method according to any of Claims 4 to 8, wherein the workstation is operable in a multi-tasking mode.

10. A method for enabling multiple application programs to share access to an emulation session running on a multi-tasking workstation operating as a terminal on a network, comprising the steps of defining the workstation resources subject to accessing, matching functions to be performed on the resources, and generating emulation session calls derived from the parameters representing the matched functions.

11. A method according to claim 10, wherein the resources subject to accessing are user input devices and emulation session windows as depicted on a video display.

12. A method according to any of claims 4 to 11, wherein said step of matching functions relates read, write and read/write inhibit operations.

13. A method for interfacing a second application program to an emulation session of a multi-tasking workstation running a first application program, comprising the steps of comparing shared access parameters of the first and second application programs upon a connect request by the second application program, selectively calling functions for a second application program having compatible parameters, enabling a lock to the emulation session in the absence of a lock by the first application program, and queueing the second application program when the emulation session is locked by the first application program.

14. A shared access emulator comprising means for defining the emulation resources subject to access, means for categorising functions performed in emulation sessions running on a workstation, means for matching categorised functions, and means for generating calls accessing the emulation session based upon the resources, functions and matches.

15. An emulator according to claim 14, wherein the resources defined are emulation session presentation space and windows.

16. An emulator according to claim 15, wherein the presentation resources are responsive to a keyboard, a pointing device, or an application program.

17. An emulator according to claim 14, 15 or 16, wherein calls are generated responsive to compatible programs.

18. A shared access emulator comprising means for categorising functions to be performed by control device and window resources in an emulation session running on a workstation, means for matching the categories of functions, and means for accessing the emulation session using calls defined by functional priorities.

19. A workstation operated as a terminal in a network, comprising means for operating the workstation in a multi-tasking mode, means for emulating in the workstation the network protocol for a terminal, means for defining in an emulation session the resources subject to a shared access, means for categorising functions performed on the resources in the emulation session, means for matching categorised functions, and means for generating calls by multi-tasking operated application programs to access the emulation session based upon the resources, functions and matches.

20. A workstation according to Claim 19, wherein the resources defined are emulation session presentation space and windows.

14

TERMINAL
EMULATOR
CODE

4

EHLLAPI

7

APPLIC.
PROGRAM
#A

- - - -

APPLIC.
PROGRAM
#N

6

8

3

1

2

FIG. 1

15

EMULATION SESSION PROGRAM ⟵ 4

ADVANCED
EMULATION HIGH LEVEL
LANGUAGE PROGRAMMING
INTERFACE

( ADVANCED EHLLAPI ) ⟵ 7A

APPLICATION
PROGRAM
#A

- NEW -

APPLICATION
PROGRAM
#B

- OLD -

APPLICATION
PROGRAM
#C

- NEW -

APPLICATION
PROGRAM
#N

- NEW -

. . .

6

FIG. 2

16

## APPLICATION PROGRAM #A

```
                    ┌──────────┐
                    │  START   │
                    └────┬─────┘
                         │
                         ▼
        ┌────────────────────────────────────────┐
        │       SET SESSION PARAMETERS            │
        │  ( CONFIGURES PROGRAM FUNCTIONALITY )   │
        └────────────────────┬───────────────────┘
                             │
                             ▼
                      ◇ REQUEST ◇        N      ┌──────────────────────────┐
                     ◇ ACCESS TO CALL ◇──────▶│     WAIT AND RETRY        │
                      ◇ FUNCTIONS ◇           │  ( EMULATIQN SESSION      │
                          │                    │  IN USE BY PROGRAM WITH   │
                          │ Y                  │  INCOMPATIBLE PARAMETERS )│
                          ▼                    └──────────────────────────┘
                      ◇ REQUEST ◇        N      ┌──────────────────────────┐
                     ◇ BY PROGRAM FOR ◇──────▶│     WAIT AND RETRY        │
                      ◇ EHLLAPI  LOCK ◇        │  ( LOCK IS IN USE BY      │
                          │                    │   ANOTHER PROGRAM )       │
                          │ Y                  └──────────────────────────┘
                          ▼
        ┌────────────────────────────────────────┐
        │        ENABLE LOCK ( EXCLUDE AND        │
        │   QUEUE OTHER PROGRAMS SEEKING          │
        │  ACCESS TO SAME PRESENTATION SPACE )    │
        └────────────────────┬───────────────────┘
                             │
                             ▼
        ┌────────────────────────────────────────┐
        │          CALL EHLLAPI FUNCTION          │
        └────────────────────┬───────────────────┘
                             │
                             ▼
                          ┌─────┐
                          │  X  │
                          └─────┘
```

FIG. 3A

X

FUNCTION
CALL COMPATIBLE
WITH SESSION
PARAMETERS

N → ERROR CALL

Y

PERFORM CALL FUNCTION
( READ/WRITE PRESENTATION SPACE )

REQUEST UNLOCK
BY EHLLAPI

EHLLAPI SERVICE OF OTHER
PROGRAMS IN QUEUE

END

FIG. 3B

## APPLICATION PROGRAM #B

```
                    ┌─────────────┐
                    │    START    │
                    └─────────────┘
                           │
                           ▼
          ┌──────────────────────────────────────┐
          │        SET SESSION PARAMETERS         │
          │  ( CONFIGURES PROGRAM FUNCTIONALITY ) │
          └──────────────────────────────────────┘
                           │
                           │            ◄─────────────────────────┐
                           ▼                                       │
                    ╱────────────╲                    ┌────────────────────────────┐
                   ╱   REQUEST     ╲       N          │      WAIT AND RETRY         │
                  ╱ ACCESS TO CALL  ╲ ───────────────►│    ( EMULATION SESSION      │
                   ╲   FUNCTION     ╱                 │  IN USE BY PROGRAM WITH     │
                    ╲────────────╱                    │  INCOMPATIBLE PARAMETERS )  │
                           │ Y                        └────────────────────────────┘
                           ▼
          ┌──────────────────────────────────────┐
          │          CALL EHLLAPI FUNCTION        │
          └──────────────────────────────────────┘
                           │
                           ▼
                    ╱────────────╲                    ┌────────────────────────────┐
                   ╱   EHLLAPI     ╲      Y           │        QUEUE FOR            │
                  ╱    LOCKED       ╲ ───────────────►│       PERFORMING            │
                   ╲      ?         ╱                 │        FUNCTION             │
                    ╲────────────╱                    └────────────────────────────┘
                           │ N                                     │
                           ▼   ◄───────────────────────────────────┘
          ┌──────────────────────────────────────┐
          │        PERFORM CALL FUNCTION          │
          │  ( READ/WRITE PRESENTATION SPACE )    │
          └──────────────────────────────────────┘
                           │
                           ▼
                    ┌─────────────┐
                    │     END     │
                    └─────────────┘
```

## FIG. 4

19

**APPLICATION PROGRAM #A**

**INTERFACE
( ADVANCED EHLLAPI )**

START

SET SESSION PARAMETERS

RETURN ERROR CODE ← N — VALID PARAMETERS ?

Y

APPLICATION WAIT AND RETRY

REQUEST ACCESS TO CALL FUNCTIONS

N — ANOTHER APPLICATION RUNNING ?

Y

ARE PARAMETERS COMPATIBLE ? — Y

N

V

**FIG. 5A**

20

APPLICATION PROGRAM #A

INTERFACE
( ADVANCED EHLLAPI )

( V )

APPLICATION WAIT AND RETRY

REQUEST EHLLAPI LOCK

LOCK
IN USE
?

Y

N

ENABLE LOCK TO QUEUE
OTHER REQUESTS

CALL EHLLAPI FUNCTION

RETURN ERROR CODE

N

COMPATIBLE
SESSION
PARAMETERS
?

Y

( W )

FIG. 5B

21

APPLICATION PROGRAM #A

INTERFACE
( ADVANCED  EHLLAPI )

W

IS
LOCK
OWNED BY
REQUESTING
PROGRAM
?

N

Y

PROCESS REQUEST

REQUEST UNLOCK OF EHLLAPI

QUEUE REQUEST

RETURN ERROR CODE

N

IS
LOCK
OWNED BY
REQUESTING
PROGRAM
?

Y

UNLOCK EHLLAPI

SERVICE QUEUED REQUESTS

APPLICATION PROGRAM ENDS

FIG.  5C